Europäisches Patentamt

European Patent Office

Office européen des brevets

(19)

(11) EP 0 816 794 A1

(12) # DEMANDE DE BREVET EUROPEEN

(43) Date de publication:
07.01.1998 Bulletin 1998/02

(51) Int Cl.6: **F42B 12/36**

(21) Numéro de dépôt: 97401599.2

(22) Date de dépôt: 04.07.1997

(84) Etats contractants désignés:
**AT BE CH DE DK ES FI FR GB GR IE IT LI LU MC NL PT SE**

(30) Priorité: **05.07.1996 FR 9608390**

(71) Demandeur: **THOMSON-CSF**
**75008 Paris (FR)**

(72) Inventeurs:
• **Micheron, François**
**94117 Arcueil Cedex (FR)**

• **Couderc, Georges**
**94117 Arcueil Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(54) **Procédé de libération d'énergie dans un aérosol**

(57)     L'invention concerne les procédés et dispositifs de libération d'énergie dans un aérosol.

Le dispositif est composé d'un lanceur (1) d'aérosol à faible champ d'ionisation et d'un dispositif à faisceau laser (4).

Le procédé consiste à envoyer (1,2) et à libérer dans une région atmosphérique donnée, un aérosol à faible champ d'ionisation et à y déclencher à distance une libération d'énergie électrique et/ou acoustique par l'interaction entre l'aérosol et deux faisceaux laser coaxiaux (5) dont l'un est de fréquence double de celle de l'autre pointés sur cet aérosol (3).

Application, en particulier, aux armes non létales, pour la dispersion d'une foule hostile par exemple.

FIG.3

EP 0 816 794 A1

**Description**

La présente invention se rapporte à un procédé et à un dispositif de libération d'énergie.

Elle permet notamment de déclencher à distance une réaction chimique dans un nuage par l'intermédiaire d'un faisceau laser pour disperser une foule agressive.

Il est connu pour disperser des foules agressives des moyens de dissuasion tels que des faisceaux lasers visibles qui permettent de transférer de l'énergie à distance. Les dispositifs connus procurent une grande facilité de pointage mais présentent une limitation en ce qui concerne l'énergie qu'ils transfèrent. Cette limitation vient de la création d'un plasma le long de l'axe de propagation du laser qui, consommateur d'énergie, s'oppose à la propagation. Pour pallier ce problème une première méthode consiste à mettre en oeuvre des faisceaux lasers suffisamment étendus pour que les champs électriques dans l'air soient inférieurs aux champs de ionisation du milieu de propagation.

Une deuxième méthode consiste à faire converger des faisceaux issus de régions différentes. Chacun des faisceaux est à lui seul incapable de créer une ionisation dans l'air, du fait de son étendue et de sa puissance crête limitées. Par contre, dans la zone de convergence, la somme des champs électriques associés à chacun des faisceaux est suffisante pour dépasser le champ d'ionisation et créer un plasma où des énergies considérables sont transformées.

Plutôt que de transporter une énergie considérable avec un faisceau laser pour créer un plasma, l'invention se propose de faire interagir un faisceau laser de faible énergie avec un aérosol pour y déclencher une réaction à distance.

A cet effet, l'invention a pour objet un procédé de libération d'énergie caractérisé en ce qu'il consiste à envoyer et à libérer dans une région atmosphérique donnée, un aérosol à faible champ d'ionisation et à y déclencher à distance une libération d'énergie électrique et/ou acoustique par l'interaction entre l'aérosol et deux faisceaux laser coaxiaux dont l'un est de fréquence double de celle de l'autre pointés sur cet aérosol.

L'invention a également pour objet un dispositif pour la mise en oeuvre du procédé précité.

L'invention sera bien comprise et ses avantages et autres caractéristiques ressortiront, lors de la description suivante présentée à titre d'illustration non limitative et faite en regard des figures annexées qui représentent :

- la figure 1, un mode de réalisation d'un dispositif de libération d'énergie selon l'invention,
- les figures 2A et 2B, deux modes de réalisation d'un dispositif à faisceau laser générant deux longueurs d'onde selon l'invention,
- la figure 3, un mode de réalisation d'un dispositif à faisceau laser générant trois longueurs d'onde selon l'invention.

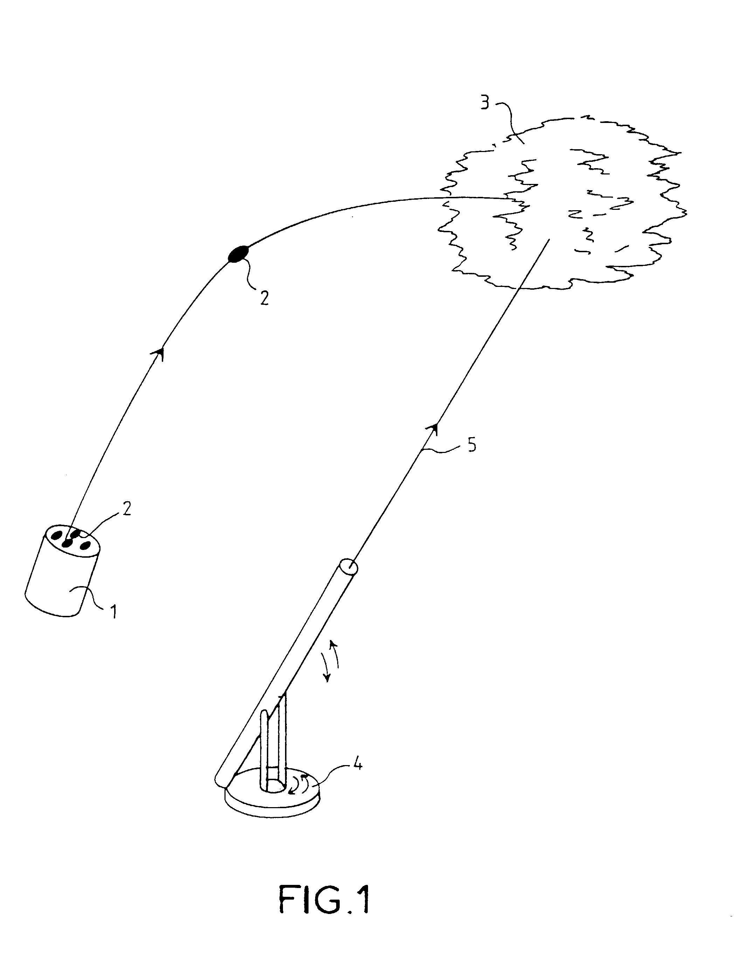

La figure 1 représente schématiquement un dispositif de libération d'énergie comprenant un lanceur 1 de projectiles 2 contenant un aérosol 3 à faible champ d'ionisation, voire inférieur au champ d'ionisation de l'atmosphère, et un dispositif à faisceau laser 4 mobile en rotation. Suivant cette disposition un lanceur 1 projette des projectiles 2 vers une zone atmosphérique donnée. Lors de leur entrée dans cette zone, les projectiles 2 libèrent un aérosol 3 à faible champ d'ionisation, par un système de déclenchement interne à retardement par exemple. Le dispositif à faisceau laser 4, mobile en rotation, pointe l'aérosol et interagit avec lui. Cette interaction peut être obtenue par la création dans un milieu isotrope, tel que l'aérosol, d'un champ électrique continu interne résultant de la somme de deux ondes optiques en phase dont la fréquence de l'une est double de celle de l'autre. Comme dans tout milieu isotrope, tel que gaz, liquide, qu'il soit amorphe ou désordonné, il existe des composantes non nulles du tenseur de susceptibilité électrique de troisième ordre $X^{(3)}$ défini par une relation de la forme :

$$P = X_0\ E + X^{(2)}\ E^2 + X^{(3)}\ E^3 + ... + X^{(n)}\ E^n \quad (1)$$

où :

$P$ est la polarisation induite dans le milieu isotrope par le champ électrique $E$,
$X_0$ est la susceptibilité linéaire, défini par la relation $\varepsilon = \varepsilon_0\ (1 + X_0)$ où $\varepsilon$ est la constante diélectrique du milieu et $\varepsilon_0$ est la constante diélectrique du vide,
$X^{(2)}$ est la susceptibilité non linéaire de second ordre, non nulle uniquement dans les milieux non centrosymétriques, donc nulle dans les gaz.

Le terme en $P^{(3)} = X^{(3)}\ E^3$ fait apparaître un terme à fréquence nulle proportionnel à $X^{(3)}\ E_1^2$ lorsque le champ $E$ appliqué au milieu isotrope est de la forme $E = E_1\ \sin \omega\ t + E_2\ \sin 2\omega t$. Dans le cas particulier où la puissance de chacun des faisceaux laser est égale à $W$, le champ électrique continu créé par l'interaction est proportionnel à $W^{3/2}$.

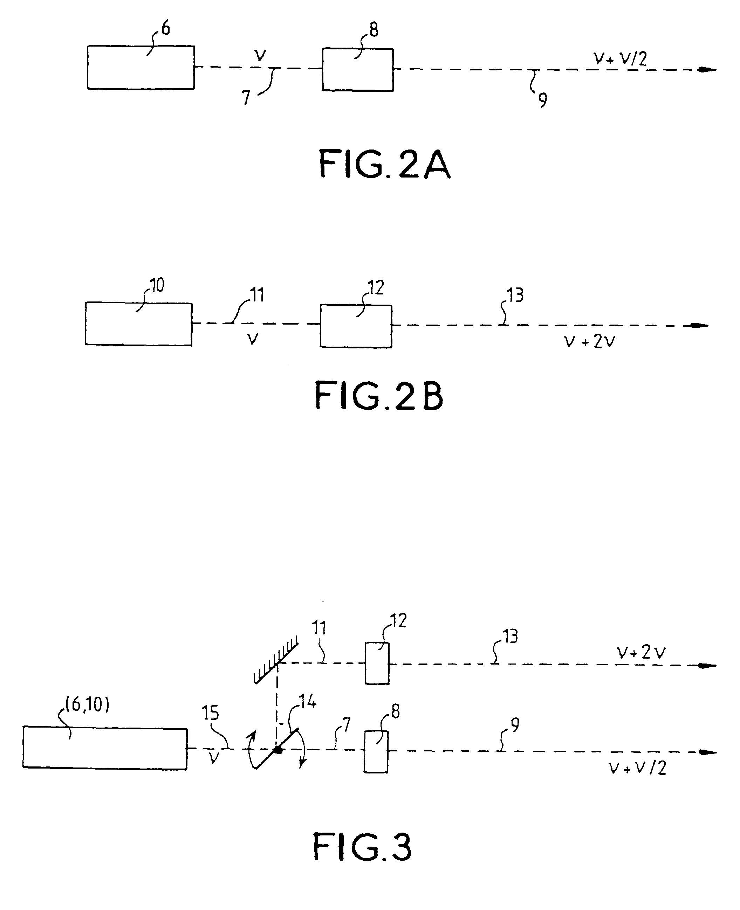

Dans le premier mode de réalisation du dispositif à faisceau laser de l'invention qui est représenté à la figure 2A, l'obtention de deux fréquences dont l'une est double de l'autre a lieu en associant un laser de base 6 avec un oscillateur paramétrique optique "dégénéré" (OPOd) 8. L'oscillateur paramétrique optique "dégénéré" 8 fournit un faisceau laser 9 composé d'une onde à la même fréquence $\nu$ que la fréquence $\nu$ de l'onde incidente 7 et d'une onde à la fréquence moitié $\frac{\nu}{2}$ de la fréquence $\nu$ de l'onde incidente 7 et donc moitié de la fréquence de la pompe.

Selon le deuxième mode de réalisation de la figure 2B, l'obtention des deux fréquences a lieu en associant un laser de base 10 avec un doubleur de fréquence 12.

Le doubleur de fréquence 12 fournit un faisceau laser 13 composé d'une onde à la même fréquence ν que la fréquence ν de l'onde incidente 11, et d'une onde à la fréquence double 2ν de la fréquence 2 de l'onde incidente 11.

A titre d'exemple, les lasers de base 6 et 10 peuvent être des lasers à Yag-Néodyme émettant à λ = 1,064 µm. L'OPOd 8 peut être mis en oeuvre de préférence avec un cristal de Phosphate oxydique de Potassium et de Titane ($KTiOPO_4$) émettant un rayonnement de longueur d'onde 2λ = 2,128 µm. Dans le cas du fonctionnement avec un doubleur de fréquence 12, le cristal utilisé peut être soit un cristal de Phosphate double de Potassium ($KH_2PO_4$) ou de Phosphate oxydique de Potassium et de Titane ($KTiOPO_4$). Dans les deux cas, seules des énergies de quelques Joules par impulsion de quelques nanosecondes sont nécessaires.

Suivant la description ci-dessus, lors du pointage du dispositif à faisceau laser sur l'aérosol, une interaction s'effectue entre le faisceau laser et l'aérosol. En fonction de sa nature, et sous l'effet du champ électrique créé par le laser, l'aérosol est capable d'exploser ou de s'enflammer. Cet aérosol est constitué de préférence de liquides polaires, tels que des solvants et des hydrocarbures, mélangés à un gaz tel qu'un alcane. L'aérosol n'étant pas enfermé dans un récipient capable de se fragmenter, l'explosion peut prendre un caractère dissuasif tout en restant peu ou pas dangereuse. L'explosion s'accompagne d'effets acoustiques et lumineux. L'onde de choc associée peut assourdir, abasourdir ou même renverser. La portée d'un tel dispositif, selon l'invention, va de quelques dizaines de mètres à typiquement un kilomètre selon les conditions de propagation.

Enfin selon un troisième mode de réalisation du dispositif à faisceau laser de l'invention illustré par la figure 3, le dispositif à faisceau laser peut combiner les deux techniques, de génération d'un faisceau laser composé de deux fréquences, exposées précédemment. Dans le mode de représentation de la figure 3, les éléments homologues à ceux des figures 2A et 2B sont représentés avec les mêmes références. La combinaison des deux techniques précédentes est réalisée par un miroir commutable 14 ou semi-réfléchissant qui permet d'obtenir un faisceau laser (9,13) avec trois ondes à trois fréquences multiples

$$\left( \frac{\upsilon}{2}, \upsilon, 2\upsilon \right).$$

L'intérêt de ce dispositif réside dans la possibilité de générer une troisième onde à 2ν donc de longueur d'onde plus courte que les longueurs d'onde $\frac{\upsilon}{2}$ et υ du faisceau laser interagissant avec l'aérosol. Et si cette longueur d'onde 2υ est visible, elle peut permettre de produire un effet psychologique déjà important en révélant la présence du dispositif de libération d'énergie et éviter ainsi d'avoir à déclencher la libération d'énergie dans l'aérosol.

**Revendications**

1.  Procédé de libération d'énergie caractérisé en ce qu'il consiste à envoyer (1, 2) et à libérer dans une région atmosphérique donnée, un aérosol (3) à faible champ d'ionisation et à y déclencher à distance une libération d'énergie électrique et/ou acoustique par l'interaction entre l'aérosol (3) et deux faisceaux laser coaxiaux (5) dont l'un est de fréquence double de celle de l'autre pointés sur cet aérosol (3).

2.  Procédé selon la revendication 1, caractérisé en ce que l'aérosol (3) a un seuil d'ionisation inférieur à celui de l'atmosphère.

3.  Procédé selon l'une quelconque des revendications 1 et 2, caractérisé en ce que l'aérosol (3) est inflammable ou explosif.

4.  Dispositif de libération d'énergie, caractérisé en ce qu'il comprend un lanceur (1) d'aérosol à faible champ d'ionisation et un dispositif à faisceau laser (4).

5.  Dispositif selon la revendication 4, caractérisé en ce que le dispositif à faisceau laser (4) comprend un laser de base (6) associé à un oscillateur paramétrique optique dégénéré (OPOd) (8).

6.  Dispositif selon la revendication 4, caractérisé en ce que le dispositif à faisceau laser (4) comprend un laser de base (10) associé à un doubleur de fréquence (12).

7.  Dispositif selon la revendication 4, caractérisé en ce que le dispositif à faisceau laser (4) comprend, un laser de base (6,10) associé simultanément à un oscillateur paramétrique optique dégénéré (OPOd) (8) et à un doubleur de fréquence (12), et un miroir commutable (14) placé dans le chemin optique du faisceau laser issu du laser de base (6,10) commutant pour transmettre ce faisceau laser à l'oscillateur paramétrique optique dégénéré (OPOd) (8) ou au doubleur de fréquence (12).

8.  Dispositif selon la revendication 4, caractérisé en ce que le dispositif à faisceau laser (4) comprend, un laser de base (6,10) associé simultanément à un oscillateur paramétrique optique dégénéré (OPOd) (8) et à un doubleur de fréquence (12), et un miroir semi-réfléchissant placé dans le chemin optique du faisceau laser (15) issu du laser de base (6,10) entre le laser de base (6,10) d'une part et l'OPOd (8) et le doubleur de fréquence (12) d'autre part.

FIG.1

FIG.2A

FIG.2B

FIG.3

Office européen
des brevets

**RAPPORT DE RECHERCHE EUROPEENNE**

Numéro de la demande

EP 97 40 1599

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR 2 674 380 A (COUDERT ANNE-MARIE) * page 1, ligne 6 - page 2, ligne 11 * --- | 1 | F42B12/36 |
| A | DATABASE WPI Week 8550 Derwent Publications Ltd., London, GB; AN 85-315204 XP002027326 & SU 705 849 A (BELOV N N) * abrégé * --- | 1,2 | |
| A | US 4 673 250 A (ROBERTS THOMAS G ET AL) 16 juin 1987 * abrégé * --- | 1 | |
| A | SMITH D C ET AL: "Aerosol-induced air breakdown with CO/sub 2/ laser radiation" JOURNAL OF APPLIED PHYSICS, MARCH 1975, USA, vol. 46, no. 3, ISSN 0021-8979, pages 1146-1154, XP002027321 * page 1146, colonne de droite, ligne 1 - ligne 6 * --- | 1,2 | |
| A | GB 2 132 740 A (KING JAMES BERTRAM) 11 juillet 1984 --- | | **DOMAINES TECHNIQUES RECHERCHES (Int.Cl.6)** F42B F41J F41H |
| A | GB 2 296 077 A (DAIMLER BENZ AEROSPACE AG) 19 juin 1996 ----- | | |

Le présent rapport a été établi pour toutes les revendications

| Lieu de la recherche | Date d'achèvement de la recherche | Examinateur |
|---|---|---|
| LA HAYE | 7 octobre 1997 | Galanti, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)